Europäisches Patentamt

European Patent Office

Office européen des brevets

(19)

(11) **EP 0 543 995 B1**

(12) **EUROPÄISCHE PATENTSCHRIFT**

(45) Veröffentlichungstag und Bekanntmachung des Hinweises auf die Patenterteilung:
**02.10.1996 Patentblatt 1996/40**

(21) Anmeldenummer: **93900003.0**

(22) Anmeldetag: **11.06.1992**

(51) Int Cl.$^6$: **G01S 13/524**

(86) Internationale Anmeldenummer:
**PCT/EP92/01310**

(87) Internationale Veröffentlichungsnummer:
**WO 92/22826 (23.12.1992 Gazette 1992/32)**

(54) **VERFAHREN ZUR GLEICHZEITIGEN BESTIMMUNG DER ENTFERNUNG UND DER GESCHWINDIGKEIT EINES ZIELES BEI EINER RADARANLAGE**

METHOD FOR THE SIMULTANEOUS DETERMINATION OF TARGET RANGE AND SPEED USING A RADAR SYSTEM

PROCEDE DE DETERMINATION SIMULTANEE DE LA DISTANCE ET DE LA VITESSE D'UN OBJECTIF AU MOYEN D'UN SYSTEME RADAR

(84) Benannte Vertragsstaaten:
**DE ES FR GB IT SE**

(30) Priorität: **13.06.1991 DE 4119509**

(43) Veröffentlichungstag der Anmeldung:
**02.06.1993 Patentblatt 1993/22**

(73) Patentinhaber: **Daimler-Benz Aerospace Aktiengesellschaft**
**81663 München (DE)**

(72) Erfinder: **NAGEL, Dieter**
**D-7900 Ulm (DE)**

(74) Vertreter: **Schulze, Harald Rudolf, Dipl.-Ing. et al**
**Daimler-Benz Aerospace AG**
**Patentabteilung**
**Sedanstrasse 10**
**89077 Ulm (DE)**

(56) Entgegenhaltungen:
EP-A- 0 336 273       US-A- 4 338 604
US-A- 4 382 258       US-A- 4 916 452

**Beschreibung**

Die Erfindung betrifft ein Verfahren zur gleichzeitigen Bestimmung der Entfernung und der Geschwindigkeit eines Zieles bei einer Radaranlage nach dem Oberbegriff des Patentanspruches 1.

Bei Radaranlagen, die nach dem HPRF-Verfahren arbeiten, kann die Geschwindigkeit bis zu einer maximalen Geschwindigkeit von ungefähr Mach neun eindeutig bestimmt werden. Je höher der Eindeutigkeitsbereich für die Bestimmung der Geschwindigkeit ist, desto geringer ist jedoch der Eindeutigkeitsbereich in der Entfernungsrichtung zur Bestimmung der Entfernung eines Zieles. Typischerweise ist dieser Eindeutigkeitsbereich derzeit begrenzt bei einer maximalen Entfernung von ungefähr einem Kilometer.

Aus der US-A- 4 916 452 ist ein Verfahren zur Bestimmung der Entfernung eines Zieles mittels eines HPRF-Radars bekannt. Dabei wird zunächst ein Dopplersignal und daraus die Geschwindigkeit des Ziels ermittelt. Das Dopplersignal wird außerdem gewichtet sowie geglättet und danach mittels einer Fouriertransformation in den Zeitbereich transformiert. Dort entsteht ein zeitabhängiges Signal mit einer ansteigenden Flanke und einem daran anschließenden, im wesentlichen konstanten Bereich. Aus der zeitlichen Länge der Flanke wird ein Schätzwert für die Entfernung ermittelt.

Der Erfindung liegt die Aufgabe zugrunde, ein gattungsgemäßes Verfahren dahingehend zu verbessern, daß unter Beibehaltung eines eindeutigen Geschwindigkeitsbereiches bis zu einer maxmimalen Geschwindigkeit von mindestens Mach neun von einem Ziel eine eindeutige Bestimmung der Entfernung möglich wird in einem Entfernungsbereich, dessen maximale Entfernungsgrenze wesentlich größer ist als ein Kilometer.

Diese Aufgabe wird gelöst durch die im kennzeichnenden Teil des Patentanspruchs 1 angegebenen Merkmale.

Vorteilhafte Ausgestaltungen und/oder Weiterbildungen sind den weiteren Ansprüchen entnehmbar.

Ein Vorteil der Erfindung besteht darin, daß selbst bei einer maximalen Geschwindigkeit von Mach neun eines Zieles noch dessen Entfernung bis zu einer maximalen Entfernung von ungefähr 400 km eindeutig bestimmbar wird.

Die Erfindung beruht darauf, daß bei einem HPRF-Verfahren die von der Radarantenne ausgesandten und von einem bewegten Ziel reflektierten Sendesignale im Dopplerbereich ausgewertet werden. Dabei wird von dem empfangenen Signal, das im wesentlichen dem reflektierten Sendessignal entspricht, zunächst die Gruppenlaufzeit des dem bewegten Ziel zugeordneten Zielspektrums ermittelt und anschließend aus der Gruppenlaufzeit die gesuchte Entfernung bestimmt.

Die Erfindung wird im folgenden anhand eines Ausführungsbeispieles näher erläutert.

Bei dem folgenden Beispiel wird angenommen, daß in einem Luftfahrzeug, z. B. einem Flugzeug, eine Puls-Doppler-Radaranlage vorhanden ist, welche mit einer hohen Pulswiederholungsrate, die in der englischsprachigen Literatur "HPRF-Mode" genannt wird, arbeitet. Eine solche für ein Luftfahrzeug geeignete Radaranlage wird auch "airborne radar" genannt. Der HPRF-Mode wird in einem airborne Radar meist als Suchmode verwendet.

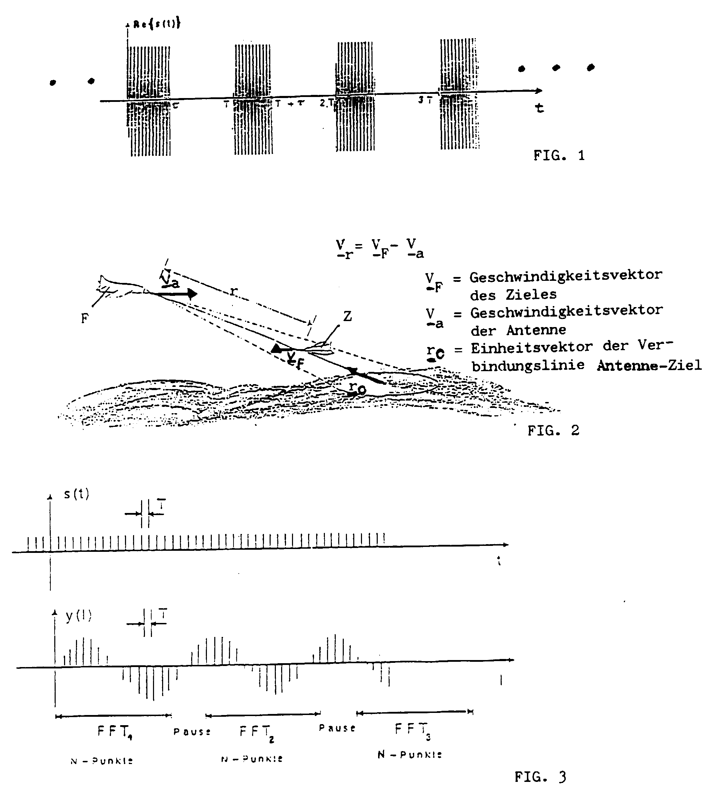

Der Realteil Re $\{s(t)\}$ (Ordinate) des Sendesignals $s(t)$ eines solchen Suchmodes ist in Abhängigkeit von der Zeit $t$ (Abzisse) in FIG. 1 dargestellt. Dieses Sendesignal $s(t)$ besteht aus Pulsen mit einer zeitlichen Länge $\tau$. Die Pulse werden zeitlich periodisch wiederholt nach einer Pulswiederholzeit T. Die Pulse enthalten ein Wechselspannungssignal mit der Sendefrequenz $f_0$. Durch die Punkte in FIG. 1 wird dargestellt, daß Pulse zeitlich fortlaufend ausgesandt werden.

Die mathematische Beschreibung des Sendesignals $s(t)$ lautet:

$$s(t) = \left( \sum_{i=-\infty}^{\infty} r_\tau(t - iT) \right) e^{j2\pi f_0 t} \quad , \quad f_0 = Sendefrequenz$$

$$r_\tau(t) = \begin{cases} 1 \; ; \; fuer \; 0 \leq t \leq \tau \\ 0 \; ; \; sonst \end{cases} \tag{1}$$

wobei $r_\tau$ die normierte Amplitude des Sendesignals bedeutet.

FIG. 2 zeigt eine typische Anordnung eines Flugzeuges F, das ein im HPRF-Mode arbeitendes Radar mit einer (Sende/Empfangs-)Antenne enthält, und ein bewegtes Ziel Z, das für die folgende Erläuterung als punktförmig angenommen wird.

Von einem solchen punktförmigen Ziel Z, das sich in der Entfernung r mit der Relativgeschwindigkeit $\underline{v}_r$ auf die Antenne zubewegt, erhält man folgendes reflektiertes Empfangssignal $s_r(t)$:

$$s_r(t) = a \sum_{i=-\infty}^{\infty} r_\tau(t - iT - t_r) \; e^{j2\pi(f_0 + f_D) \cdot (t - t_r/2)} \qquad (2)$$

In Gl.(2) ist nicht berücksichtigt, daß die Antenne nur endliche Zeit auf das Ziel Z schaut und daß die Amplitude a des empfangenen Signals für reale Ziele fluktuieren (schwanken) kann. In Gl.(2) ist $t_r$ die Laufzeit des Signals und $f_D$ die Dopplerverschiebung. Für diese beiden Parameter gilt mit c als Lichtgeschwindigkeit:

$$t_r = \frac{2r}{c} \qquad (3a)$$

$$f_D = \frac{2r_0 f_0}{c}(\underline{v}_F - \underline{v}_a) \qquad (3b)$$

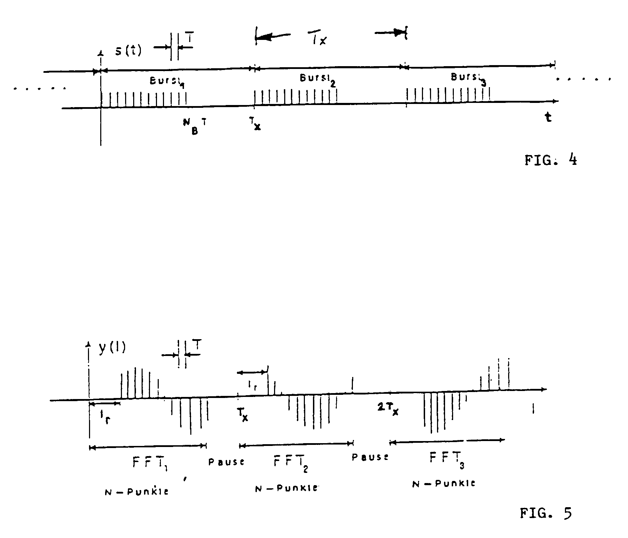

Die Signalverarbeitung im HPRF-Suchmode erfolgt wie nachfolgend beschrieben. Es wird das Empfangssignal $s_r$(t) zunächst mit der Sendefrequenz $f_0$ demoduliert und dann innerhalb einer Pulswiederholdauer T genau einmal abgetastet. Vom abgetasteten Signal y(l) wird anschließend von jeweils N Punkten (N = 2048) gemäß FIG. 3 abschnittsweise die DFT (FFT) gebildet gemäß den Formeln:

$$y(t) = s_r(t) \, e^{-j2\pi f_0 t}$$

$$y(l) = a \sum_{i=-\infty}^{\infty} \delta_0(l - i - N_r)e^{j2\pi f_D l \bullet T + j\phi} \qquad\qquad N_r = \frac{t_r}{T}$$

$$Y_x(m) = \sum_{l=N_x}^{N_x + N - 1} y(l)e^{-j\frac{2\pi l m}{N}} \qquad\qquad x = 1, 2, \ldots \qquad (4)$$

Der Startpunkt $N_1$ für die erste FFT ("Fast Fourier Transformation") ist dabei willkürlich. Die Startpunkte $N_x$ der nachfolgenden FFTs richten sich dann nach den Pausenzeiten zwischen der FFTs, der Länge der vorhergehenden FFTs (in diesem Fall immer konstant = N) und dem ursprünglichen Startpunkt $N_1$.

Beim sogenannen "phase-ranging" gemäß FIG. 4 besteht das Sendesignal nicht aus einer unendlich langen Pulsfolge sondern aus Bursts der Länge $N_B$T. Das Sendesignal ist weiterhin charakterisiert durch die Burstwiederholdauer $T_x$. Daraus ergibt sich, daß auch das Empfangssignal in Bursts aufgeteilt ist. Ein solches Empfangssignal ist in FIG. 5 für ein nichtfluktuierendes Ziel (nicht fluktuierendes Empfangssignal) dargestellt. Dabei ist die Laufzeit $t_r$ der Bursts nach Gl.(3a) unmittelbar proportional der Entfernung r des Zieles. Man kann aber bei hohen Rauschstörungen den Parameter $t_r$ nicht mehr direkt aus dem Zeitsignal bestimmen. Deshalb wird die Laufzeit $t_r$ mit Hilfe des Phasenverlaufs in der FFT geschätzt. Dabei muß die Länge N der FFT kleiner als die Burstwiederholdauer $T_x$ gewählt werden. Es ergibt sich folgende Bedingung:

$$NT + T_p < T_x \qquad (5)$$

mit

NT =  Länge der FFT
$T_p$ =  Pausezeit
$T_x$ =  Burstwiederholdauer,

wobei $T_p$ die Pausezeit zwischen den einzelnen FFTs ist.

Bei einem solchen "phase-ranging"-Verfahren ist das Sendesignal beschreibbar durch die Formel:

$$s(t) = \left[ b(t) * \sum_{n=-\infty}^{\infty} \delta_0(t - nT_x) \right] e^{j2\pi f_0 t} \tag{6}$$

mit:

$$b(t) = \sum_{i=0}^{N_B} r_\tau(t - iT) \tag{}$$

wobei * den Faltungsoperator bedeutet.

Für ein nichtfluktuierendes Ziel ergibt sich, im Gegensatz zu Gl.(2), ein zugehöriges Empfangssignal $s_r(t)$ gemäß folgender Formel:

$$s_r(t) = \left[ b(t - t_r) * \sum_{n=-\infty}^{\infty} \delta_0(t - nT_x) \right] e^{j2\pi (f_0 + f_D)(t - t_r/2)} \tag{7}$$

Dieses Empfangssignal wird mit Hilfe der Sendefrequenz $f_0$ demoduliert, so daß ein demoduliertes Signal $y(t)$ entsteht gemäß der Formel:

$$y(t) = s_r(t) e^{-j2\pi f_0 t} \tag{8}$$

Wird nun aus diesem reflektierten und bezüglich des Sendesignals zeitverschobenen Signal für lediglich einen Burst die Fouriertransformierte gebildet gemäß den folgenden Formeln:

$$Y_x(f) = \int_{(x-1)T_x}^{xT_x} y(t) e^{-j2\pi ft} dt \tag{9}$$

$$Y_x(f) = \int_0^{T_x} b(t - t_r) e^{j2\pi f_D t + j\phi_x} e^{-j2\pi ft} dt$$

$$Y_x(f) = B(f - f_D) e^{j2\pi f t_r + j\phi_x} \tag{10}$$

$$Y_x(f) = |Y_x(f)| e^{j \Psi_x(f)}$$

so ist in allen Phasenverläufen $\Psi_x(f)$ die Laufzeit $t_r$ proportional der Frequenz $f$ enthalten gemäß den Formeln:

$$\psi_x(f) \;=\; Im\{\log Y_x(f)\}$$

$$\psi_x(f) \;=\; 2\pi f t_r + \phi_x \qquad\qquad (11)$$

Die Ableitung der Phase nach der Frequenz ergibt die Gruppenlaufzeit $t_{gx}(f)$ :

$$t_{gx}(f) \;=\; \frac{\partial \psi_x(f)}{\partial f} \;=\; 2\pi t_r \;=\; \frac{4\pi}{c} T \qquad\qquad (12)$$

die dann direkt proportional der Entfernung r des Zieles ist.

Für niedrigere Signal-zu-Rauschverhältnisse (S/N<30 dB) wird $t_{gx}(f)$ vorteilhafterweise am Frequenzpunkt $f=f_D$ geschätzt.

Arbeitet eine Radaranlage z. B. in einem HPRF-Mode, zu welchem die folgenden Daten gehören:

Pulswiederholdauer T (= 1/Pulswiederholfrequenz) = 5,0 µsec = 1/(200kHz)

duty-cycle $\tau/T$: $0,1 \leq \tau/T \leq 0,4$

FFT-Länge N: 2048

Burstwiederholdauer $T_x$: 11 msec > 2048 T + $T_p$,

so ist mit einer solchen Radaranlage eine eindeutige Bestimmung der Entfernung eines mit einer hohen Geschwindigkeit bewegten Zieles, z. B. eines Flugzeuges, möglich bis zu einer maximalen Entfernung von ungefähr 400 km.

Die Erfindung ist nicht auf das beschriebene Ausführungsbeispiel beschränkt, sondern sinngemäß auf weitere anwendbar. Beispielsweise kann eine solche Radaranlage auch in einer ortsfesten oder einer beweglichen auf der Erde befindlichen Überwachungsanlage verwendet werden.

**Patentansprüche**

1. Verfahren zur gleichzeitigen Bestimmung der Entfernung und der Geschwindigkeit eines Zieles bei einer Radaranlage, die nach dem HPRF-Verfahren arbeitet, wobei im Dopplerbereich ein der Geschwindigkeit zugeordnetes Dopplersignal erzeugt wird und aus diesem die Entfernung des Ziels ermittelt wird, dadurch gekennzeichnet,

   - daß ein Sendesignal, welches Pulse mit einem Wechselspannungssignalanteil der Sendefrequenz $f_0$ und einer Pulswiederholdauer T enthält, verwendet wird,

   - daß eine vorgebbare Anzahl von Pulsen zu einem Burst zusammengefaßt und mit einer vorgebbaren Burstwiederholdauer $T_x$ ausgesandt werden,

   - daß ein Empfangssignal, welches durch Reflexion des Sendesignals an einem Ziel entsteht, demoduliert wird mit einem Signal, welches die Sendefrequenz $f_0$ enthält,

   - daß das demodulierte Empfangssignal innerhalb der Pulswiederholdauer T genau einmal abgetastet wird, so daß ein abgetastetes Signal, das in Bursts unterteilt ist, entsteht,

   - daß bei dem abgetasteten Signal jeweils von einem reflektierten und damit bezüglich des Sendesignals zeitverschobenen Burst mittels einer schnellen Fouriertransformation (DFT, FFT) die Fouriertransformierte gebildet wird,

   - daß von der Fouriertransformierten deren Phasenverlauf $\Psi_x(f)$ an der Stelle $f=f_D$ bestimmt wird, wobei $f_D$ die der Geschwindigkeit entsprechende Dopplerfrequenz ist,

   - daß der Phasenverlauf $\Psi_x(f)$ nach der Frequenz f differenziert und daraus die Gruppenlaufzeit $t_{gx}(f)$ an dem Frequenzpunkt $f=f_D$ des Bursts bestimmt wird und

   - daß aus der Gruppenlaufzeit $t_{gx}(f)|_{f=f_D}$ die Entfernung r des Zieles (Z) ermittelt wird.

**2.** Verfahren nach Anspruch 1, dadurch gekennzeichnet, daß die Burstwiederholdauer $T_x$ größer als $N_B \cdot T$ gewählt wird, wobei $N_B$ die zu einem Burst gehörende Anzahl von Pulsen und T die Pulswiederholzeit bedeuten.

**3.** Verfahren nach Anspruch 1 oder Anspruch 2, dadurch gekennzeichnet, daß die Länge N der schnellen Fouriertransformation (FFT) kleiner als die Burstwiederholdauer $T_x$ gewählt wird.

**4.** Verfahren nach einem der vorherigen Ansprüche, dadurch gekennzeichnet, daß jeweils zwei Fouriertransformationen durch eine vorgebbare Pausezeit $T_p$ getrennt werden.

**5.** Verfahren nach einem der vorherigen Ansprüche, dadurch gekennzeichnet, daß die im HPRF-Mode arbeitende Radaranlage als Bordradar in einem Flugzeug verwendet wird.

## Claims

**1.** Method for simultaneous determination of the distance and the speed of a target in a radar installation, which operates in accordance with the HPRF method, wherein a Doppler signal associated with the speed is generated in the Doppler range and the distance of the target is ascertained from this signal, characterised thereby

- that a transmission signal, which contains pulses with an alternating voltage signal component of the trans-mission frequency $f_0$ and a pulse repetition period T, is used,

- that a presettable number of pulses are combined into a burst and transmitted with a presettable burst repetition period $T_x$,

- that a reception signal, which arises through reflection of the transmission signal at a target, is demodulated by a signal which contains the transmission frequency $f_0$,

- that the demodulated reception signal is sampled exactly once within the pulse repetition period T so that a sampled signal, which is divided into bursts, arises,

- that in the case of the sampled signal the fourier transform is formed by means of a fast fourier transformation (DFT, FFT) each time from a burst which is reflected and thus displaced in time with respect to the transmission signal,

- that the phase course $_x(f)$ of the fourier transforms is determined at the position $f\text{-}f_D$, wherein $f_D$ is the Doppler frequency corresponding to the speed,

- that the phase course $\psi_x(f)$ is differentiated according to the frequency f and the group velocity $t_{gx}(f)$ at the frequency point $f=f_D$ of the bursts is determined therefrom and

- that the distance r of the target (Z) is ascertained from the group velocity $t_{gx}(f)|_{f=f_D}$.

**2.** Method according to claim 1, characterised thereby that the burst repetition period $T_x$ is selected to be greater than $N_B \cdot T$, wherein $N_B$ signifies number of pulses belonging to a burst and T the pulse repetition time.

**3.** Method according to claim 1 or claim 2, characterised thereby that the length N of the fast fourier transformation (FFT) is selected to be smaller than the burst repetition period $T_x$.

**4.** Method according to one of the preceding claims, characterised thereby that two fourier transformations are separated each time by a presettable pause time $T_p$.

**5.** Method according to one of the preceding claims, characterised thereby that the radar installation operating in HPRF mode is used as an on-board radar in an aircraft.

**Revendications**

1. Procédé pour déterminer simultanément la distance et la vitesse d'un objectif dans le cas d'un système radar fonctionnant selon le procédé HPRF, selon lequel on génère, dans le domaine Doppler, un signal Doppler coordonné à la vitesse et on détermine la distance de l'objectif à partir de ce signal, caractérisé en ce que

   - on utilise un signal d'émission contenant des impulsions avec une fraction de signal de tension alternative de la fréquence d'émission $f_0$ et une durée de répétition des impulsions T,
   - on réunit un nombre, pouvant être préfixé, d'impulsions en une salve et on émet avec une durée de répétition de salves $T_x$ pouvant être préfixée,
   - on démodule un signal de réception, onbenu par réflexion du signal d'émission sur un objectif, avec un signal qui contient la fréquence d'émission $f_0$,
   - on échantillonne exactement, une seule fois, le signal de réception démodulé, à l'intérieur de la durée de répétition des impulsions T, de sorte qu'il se forme un signal échantillonné divisé en salves,
   - avec le signal échantillonné, on forme, chaque fois à partir d'une salve réfléchie donc décalée dans le temps par rapport au signal d'émission, au moyen d'une transformation de Fourier rapide (DFT, FFT), la transformée de Fourier,
   - on détermine l'allure de phase $\psi_x(f)$ de la transformée de Fourier au point $f = f_D$, où $f_D$ est la fréquence Doppler correspondant à la vitesse,
   - on différencie l'allure de phase $\psi_x(f)$ selon la fréquence f et on détermine à partir du résultat obtenu le temps de propagation de groupe $t_{gx}(f)$ au point de fréquence $f = f_D$ de la salve et
   - on détermine la distance r de l'objectif (Z) à partir du temps de propagation de groupe $t_{gx}(f)|_{f = f_D}$.

2. Procédé selon la revendication 1, caractérisé en ce que l'on choisit la durée de répétition des salves $T_x$ plus grande que $N_B \cdot T$, où $N_B$ représente le nombre d'impulsions appartenant à une salve et T représente le temps de répétition des impulsions.

3. Procédé selon la revendication 1 ou 2, caractérisé en ce que l'on choisit la longueur N de la transformation de Fourier rapide (FFT) plus petite que la durée de répétition des salves $T_x$.

4. Procédé selon une des revendications précédentes, caractérisé en ce que l'on sépare chaque fois deux transformations de Fourier par un temps d'intervalle $T_p$ pouvant être préfixé.

5. Procédé selon une des revendications précédentes, caractérisé en ce que le système radar, fonctionnant dans le mode HPRF, est utilisé comme radar de bord dans un avion.

FIG. 1

$$\underline{V}_r = \underline{V}_F - \underline{V}_a$$

$\underline{V}_F$ = Geschwindigkeitsvektor des Zieles

$\underline{V}_a$ = Geschwindigkeitsvektor der Antenne

$r_0$ = Einheitsvektor der Verbindungslinie Antenne-Ziel

FIG. 2

FIG. 3

FIG. 4

FIG. 5